# EUROPEAN PATENT APPLICATION

(11) **EP 2 131 217 A1**
(43) Date of publication of application: **09.12.2009**
(21) Application number: 07715293.2
(22) Date of filing: 01.03.2007
(51) Int. Cl.: G02B 5/12, G06K 19/07, G09F 13/16

(54) **RADIO WAVE TRANSMISSION TYPE RETROREFLECTION SHEET**

(71) Applicant: Nippon Carbide Kogyo Kabushiki Kaisha, Tokyo 108-8466 (JP)
(72) Inventor: MIMURA, Ikuo, Uozu-shi Toyama 937-0061 (JP)
(74) Representative: HOFFMANN EITLE
(86) International application number: PCT/JP2007/054491
(87) International publication number: WO 2008/107987

(57) **Abstract**

A radio wave transmission type retroreflective sheeting in the present invention is structured such that a specular reflection region in which a specular reflection layer is installed is electrically insulated by a non-specular reflection region in which the specular reflection layer is not installed, is partly installed by a repeated pattern so as to form an independent region, and exhibits a radio wave transmitting property, in the retroreflective sheeting in which the specular reflection layer is installed.

## Description

### Technical Field

The present invention relates to a radio wave transmission type retroreflective sheeting. In detail, the present invention relates to a radio wave transmission type retroreflective sheeting in which a specular reflection layer is installed, **characterized in that** a specular reflection region in which the specular reflection layer is installed is electrically insulated by a non-specular reflection region in which the specular reflection layer is not installed, is installed by a repealed pattern so as to form an independent region, and exhibits a radio wave transmitting property.

In more detail, the present invention relates to a radio wave transmission type retroreflective sheeting **characterized in that** the non-specular reflection region constructs a region formed by coupling straight line shaped, bending line shaped or/and curved line shaped linear regions having a width between 0.1 and 10mm, preferably between 0.1 and 5 mm, and more preferably between 0.1 and 1.5 mm.

The radio wave transmission type retroreflective sheeting in the present invention can be preferably used in a radio frequency identification device (hereinafter, refer to as RFID) holding a night-time visibility by being combined with the RFID of a passive type or an active type.

### Background Art

With regard to the retroreflective type RFID in which the retroreflective sheeting and the RFID are combined, there have been proposed several devices.

In Patent Document 1 of BANTLI, there is disclosed an integral type retroreflective electronic display device. In accordance with the description of this patent, there is disclosed a retroreflective device for both visual and electromagnetic data communication, the device including: a retroreflective sheeting for retroreflecting incident light, the retroreflecting sheeting having visual information thereon, the retroreflective sheeting including a base sheet having a monolayer of retroreflective microspheres which are embedded in one of its surfaces, the base sheet having specular light reflecting means underlying and paced from the microspheres by transparent material; antenna means for electromagnetic communication; and coupling means for allowing coupling to the antenna means.

However, in the description relating to the retroreflective sheeting which can be preferably used in the invention of BANTLI, for example, there is described "new types of retroreflective sheeting may be utilized that are not opaque to electromagnetic radiation, and the continuous conductive reflective layer of the retroreflective sheeting may be used as the ground plane for the antenna network". Further, there is described "an encapsulated lens type of retroreflective sheeting, such as 3M brand Scotchlite ^{™} Reflective Sheeting High Intensity Grade, manufactured by Minnesota Mining and Manufacturing Company, may be used as retroreflective sheeting of electronic license plate 2", but there is not disclosed what kind of retroreflective sheeting can be preferably used, and a commercially available retroreflective sheeting is simply used.

Further, in Patent Document 2 of BANTLI, there is disclosed an electronic license plate architecture. In accordance with the description of this patent, there is disclosed an electronic license plate system for use in an electronic vehicle communication system in which a plurality of remote traffic management stations communicate with the electronic license plate, including: a license plate portion, including visual identification information and an identification means for storing restricted information, the restricted information including at least one type of vehicle identification information, and wherein the restricted information cannot be altered by the remote stations or by the vehicle; information means for storing unrestricted information, wherein the unrestricted information can be altered by at least one of the remote stations or by the vehicle; communication means, operatively connected to the identification means and to the information means, for processing communications with the remote stations; antenna means for transmitting and receiving the communications with the remote stations; and attachment means fixed to the vehicle for replaceably attaching the license plate portion to the vehicle, such that the license plate portion can be replaced without having to replace the information means.

Further in Patent Document 3 of MIMURA, there is disclosed an invention relating to a retroreflective product in which an integrated circuit is sealed **characterized in that** it includes an integrated circuit module incorporating an integrated circuit, a light-retroreflective element and a support for them.

However, in either invention, there is not disclosed what structured retroreflective sheeting is preferably used by being applied an excellent radio wave transmitting property and a retroreflective property.
Patent Document 1: Japanese Patent Application National Publication (Laid-Open) No. 9-508983
Patent Document 2: Japanese Patent Application National Publication (Laid-Open) No. 11-505050
Patent Document 3: WO 02/103629

### Disclosure of the Invention

A problem to be solved by the present invention is to provide a radio wave transmission type retroreflective sheeting which can be preferably used in an active type or passive type RFID holding a night-time visibility by being combined with the RFID.

The other problem to be solved by the present invention is to provide a radio wave type retroreflective sheeting which can efficiently transmit a weak radio wave in a communication of the RFID using the weak radio wave, and more particularly to provide a radio wave transmission type retroreflective sheeting which can be preferably used in the passive type RFID.

Further the other problem to be solved by the present invention is to provide a radio wave transmission type retroreflective sheeting which can be preferably used in a retroreflective type RFID, in which the radio wave transmission type retroreflective sheeting is provided with an excellent retroreflective property which can sufficiently secure a night-time visibility.

It is demanded to secure the retroreflective performance as the retroreflective device at a time of using the retroreflective type RFID for a retroreflective sticker such as a vehicle number plate, and a third plate (a vehicle recognition sticker attached to a vehicle glass window), or a traffic sign, a commercial sign or the like. The problem to be solved by the present invention is to provide a radio wave transmission type retroreflective sheeting which can satisfy the demand of the retroreflective performance while securing a communication performance of the RFID.

The retroreflective type RFID in accordance with the present invention aims to enable an achievement of an efficient radio wave communication with respect to an RFID reader installed in an external portion via a communication antenna.

The radio wave transmission type retroreflective sheeting in the present invention is structured such that a specular reflection region in which a specular reflection layer is installed is electrically insulated by a non-specular reflection region in which the specular reflection layer is not installed, is partly installed by a repeated pattern so as to form an independent region, and exhibits a radio wave transmitting property, in the retroreflective sheeting in which the specular reflection layer is installed.

As a method of partly installing the specular reflection layer as the independent region, there can be employed a method of previously installing the specular reflection layer in all the regions and thereafter partly removing it, and a method of partly installing the specular reflection layer.

As a method of partly removing, there can be employed a chemical etching method, a mechanical removing method, an energy line irradiating method and a chemical reaction method.

As a chemical etching method, there can be employed a method of partly removing the specular reflection layer by applying an etching processing solution such as various acids and alkalis which can be removed as a soluble salt by being reacted with the specular reflection layer by means of a printing or spray method. After the etching, it is preferable to carry out a water washing for protecting the specular reflection layer from corrosion of the processing solution. Further, it is possible to add a viscosity improver or the like for improving a printing property and a spaying property to the processing solution. As a method of printing, there can be appropriately employed a known printing method such as a gravure printing, a flexographic printing, a screen printing, and an ink jet printing, but the flexographic printing and the gravure printing are particularly preferable since a fine printing pattern can be easily obtained.

As a mechanical removing method, it is possible to partly remove the specular reflection layer by a brush polishing method, a sand blast method or the like after laminating a mask sheet for protecting a non-removed surface.

As an energy irradiating method, there can be employed a method of vaporizing and removing the specular reflection material by continuously scanning a high energy line such as a laser beam, and an electron beam to the removed region. Since the energy line irradiating method as mentioned above can freely or partly form a preferable shape of the non-specular reflection region, it can be particularly preferably used.

In the retroreflective sheeting in accordance with the present invention, the laser beam irradiating method can be particularly preferably used. As the irradiated laser beam, various laser light sources such as YAG laser, and carbon dioxide laser can be used, but the light source is not particularly limited. Further, a diameter of the laser beam can be appropriately adjusted in conformity to a width of the non-specular reflection region, and it is possible to carry out a wider process by scanning two or more times in some cases.

The laser process can remove the specular reflection layer by irradiating from a front surface reflection layer side of the retroreflective sheeting, but it is preferable to directly irradiate the laser to the specular reflection layer from a back surface of the retroreflective sheeting be fore an adhesive coated layer is laminated.

As a chemical reaction method, there can be employed a method of losing a conducting property by forming a non-conductive oxide, salt or the like while reacting with the specular reflection material. As a reactive material, there can be employed various acids and alkali compounds which react with the specular reflection material.

Further, as a method of partly installing the specular reflection layer, the specular reflection layer can be installed by a vacuum deposition method, a sputtering method, a chemical plating method or the like, after laminating a mask sheet for protecting the non-specular reflection region.

The specular reflection region in which the specular reflection layer is installed in the present invention is electrically insulated by the non-specular reflection region in which the specular reflection layer is not installed, and is partly installed by the repeated pattern so as to form the independent region. In the case that it is not electrically insulated by the non-specular reflection region, the radio wave transmitting property is lowered and it is not preferable.

The region in which the non-specular reflection region is installed as mentioned above may be installed over the whole region of the retroreflective portion of the retroreflective type RFID, and may be partly installed in the region in which the RFID antenna device is installed. In the partly installing method as mentioned above, it is preferable that the non-specular reflection region is installed larger than an area of the antenna device since a radio wave recognizing property is excellent. Preferably, it is preferable that the non-specular reflection region is equal to or more than 10 mm of an outer periphery of the antenna, and it is further preferable that it is equal to or more than 25 mm.

The non-specular reflection region in the present invention constructs a region in which straight line shaped, bending line shaped or/and curved line shaped linear regions having a width between 0.1 and 10 mm are coupled.

Since it becomes hard to hold the electric insulating property between the specular reflection regions in the case that the width of the non-specular reflection region is less than 0.1 mm, the radio wave transmitting property is lowered and it is not preferable. Further, in the case that it goes beyond 10 mm, since the retroreflective performance is lowered, and the retroreflective light in the night becomes scattering, an outer appearance becomes uneven and it is not preferable. Accordingly, a preferable width is between 0.1 and 5 mm, and a further preferable width is between 0.1 and 1.5 mm.

The shape of the non-specular reflection region is the straight line shaped, bending line shaped and/or curved line shaped linear regions, and the independent specular reflection region is left by a combination of these linear regions.

The shape of the independent region of the specular reflection region in the present invention is preferably set such that an aspect ratio (L/S) of an outer end length (L) in the longest direction of the independent region and an outer end length (S) in a vertical direction thereto is equal to or more than 2.

Alternatively, it is possible to preferably use a specular reflection region in which a lot of circles, ovals or polygons such as quadrangles are arranged in accordance with a repeated pattern.

The radio wave transmission type retroreflective sheeting in which the specular reflection region having the great aspect ratio as mentioned above is installed, is particularly preferable in the case of the RFID or the external reader in which a communication antenna such as to generate a radio wave having a strong directivity such as a bar antenna, and a dipole antenna is installed.

It is necessary that the installing direction of the retroreflective sheeting is changed by an installing direction of the reading antenna and a directing direction of the radio wave. In the case that the aspect ratio is less than 2, a reading performance is lowered and it is not preferable.

The shape of the reflection region may be formed as a rectangular shape which is sectioned by the straight line shaped non-specular reflection region. In the case of the rectangular non-specular reflection region as mentioned above, the aspect ratio is defined on the has is of a magnitude of the retroreflective sheeting installed in the used retroreflective type RFID. Further, in the case that the non-specular reflection region is partly installed, it is defined in accordance with a magnitude of the non-specular reflection region.

It is preferable that an area rate of the independent region of the specular reflection region in the present invention is between 70 and 99%.

In the case that it goes beyond 99%, since it becomes hard to keep the electric insulating property between the secular reflection regions, the radio wave transmitting property is lowered and it is not preferable. Further, in the case that it is less than 70%, since the retroreflecting performance is lowered, and the retroreflective light in the night becomes scattering, the outer appearance becomes uneven and it is not preferable. Accordingly, a preferable area rate is between 85 and 99%, and a further preferable area rate is between 85 and 90%.

A retroreflective element constructing the retroreflective sheeting in the present invention can employ an open lens type reflection element, a sealed lens type retroreflective element, a capsule lens type retroreflective element or a cube corner type retroreflective element.

The retroreflsctive element which can be used in the present invention and the retroreflective sheeting formed thereby can be manufactured by a method which is known by itself, and the manufacturing method is not particularly limited.

The specular reflection layer is installed in the retroreflective element, and can efficiently reflect the incoming light in a specular manner.

Further, a specular reflection layer component constructing the specular reflection layer in the present invention can preferably use an aluminium, a silver, a nickel, and/or a copper, and since the aluminum can particularly lighten the outer appearance of the sheeting, the aluminum is preferably used.

The specular reflection component can be installed by the vacuum deposition method, the sputtering method, chemical plating method and the like, and the vacuum deposition method can be particularly used preferably.

A preferable thickness of the specular reflection layer is between 0.05 and 2 µm. Further, the specular reflection layer may be formed by one layer, and may be formed by laminating two or more layers of the component mentioned above.

The radio wave transmission type retroreflective sheeting in the present invention can be preferably used in the retroreflective type RFID holding the night-time visibility, by being combined with the active type or passive type RFID.

Further, in the communication of the RFID using the weak radio wave, it is possible to efficiently transmit the weak radio wave. Particularly, it can be preferably used in the passive type RFID.

Further, the radio wave transmission type retroreflective sheeting has an excellent retroreflecting property which can sufficiently secure the night-time visibility.

It is possible to satisfy the demand of the retroreflecting performance while securing the communicating performance of the RFID, at a time of using as the retroreflective device, in the case that the retroreflective type RFID is used for a vehicle number plate, a third plate (a vehicle recognition sticker attached to a vehicle glass window) or a traffic sign.

### Brief Description of the Drawings

Fig. 1 is a plan view showing a non-specular reflection region and a specular reflection region in accordance with the present invention.
Fig. 2 is a plan view showing a non-specular reflection region and a specular reflection region in accordance with the present invention.
Fig. 3 is a plan view showing a non-specular reflection region and a specular reflection region in accordance with the present invention.
Fig. 4 is a plan view showing a non-specular reflection region and a specular reflection region in accordance with the present invention.
Fig. 5 is a plan view showing a non-specular reflection region and a specular reflection region in accordance with the present invention.
Fig. 6 is a plan view showing a non-specular reflection region and a specular reflection region in accordance with the present invention.
Fig. 7 is a plan view showing a non-specular reflection region and a specular reflection region in accordance with the present invention.
Fig. 8 is a cross sectional view showing a sealed lens type retroreflective sheeting in accordance with the present invention.
Fig. 9 is a cross sectional view showing a cube corner type retroreflective sheeting in accordance with the present invention.
Fig. 10 is a plan view showing a non-specular reflection region and a specular reflection region in accordance with the present invention.
Fig. 11 is a view showing a relationship among a no-specular reflection region, a specular reflection region and a tag in accordance with the present invention.

### Best Mode for Carrying Out the Invention

A description will be given below of preferable modes of a radio wave transmission type retroreflective sheeting in accordance with the present invention with reference to the accompanying drawings.

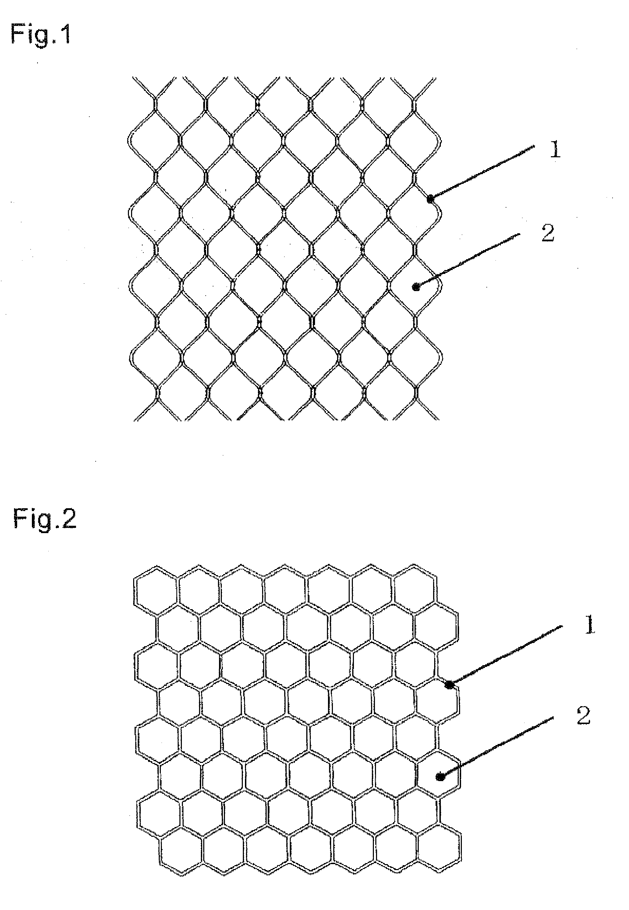

Figs. 1 to 7 are plan views showing a non-secular reflection region 1 and a specular reflection region 2 in the present invention. Reference numeral 1 denotes a non-secular reflection region, and there is shown that it constructs a region in which straight line shaped, bending line shaped or/and curved line shaped linear regions having a width between 0.1 and 1.5 mm are coupled. Further, reference numeral 2 denotes a specular reflection region, and there is shown that the specular reflection region is electrically insulated by a non-specular reflection region in which the specular reflection layer is not installed, forms an independent region and is installed partly in accordance with a repeated pattern.

In Fig. 1, there is shown that the non-specular reflection region 1 is structured such that wave shaped curved lines lap over each other, and forms the specular reflection region 2 as an independent region.

In Fig. 2, there is shown that the non-specular reflection region 1 is constructed by rectangular lines, and forms a hexagonal specular reflection region 2 as an independent region.

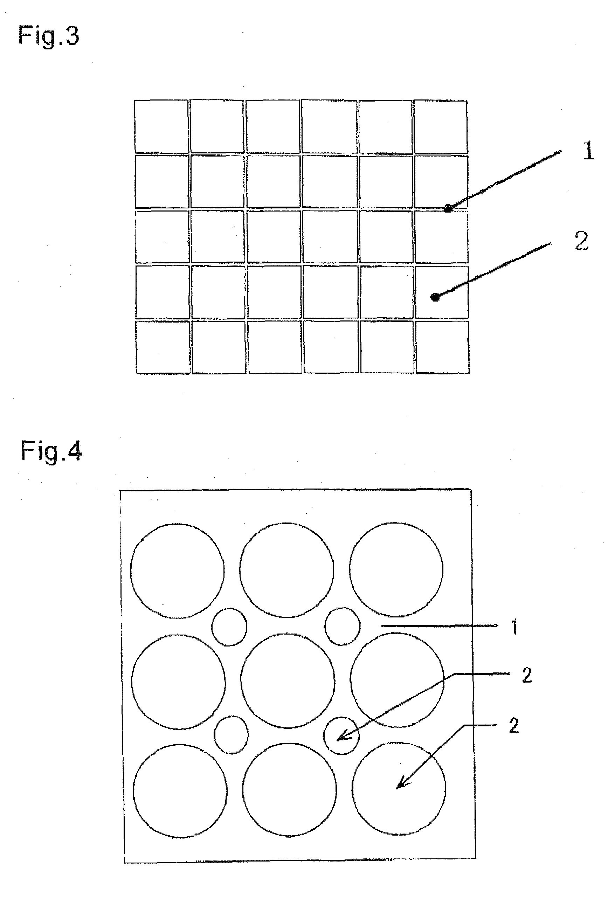

In Fig. 3, there is shown that the non-specular reflection region 1 is constructed by rectangular lines, and forms an approximately square specular reflection region 2 as an independent region.

In Fig. 4, there is shown that the non-specular reflection region 1 is constructed, and forms a circular specular reflection region 2 as an independent region.

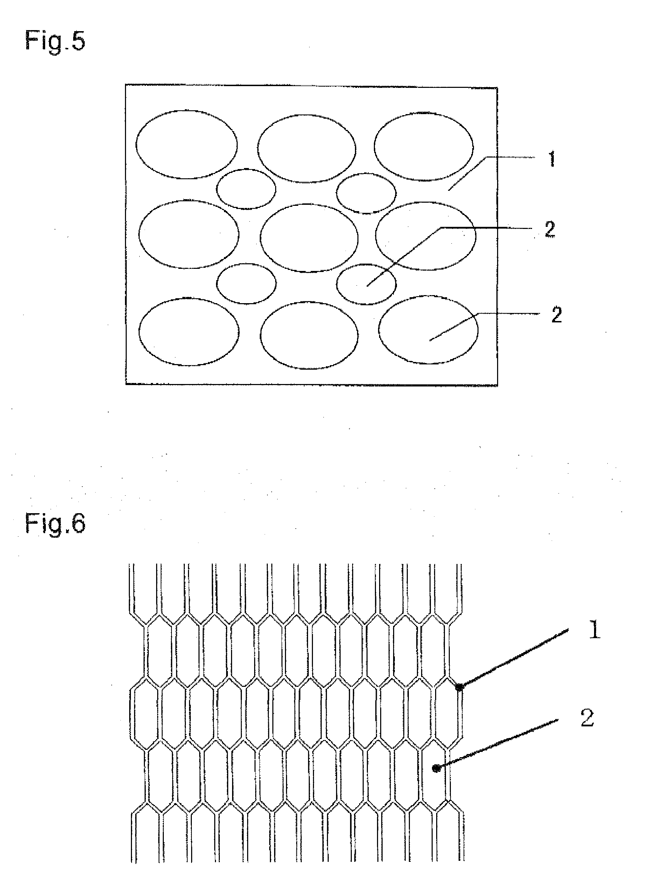

In Fig. 5, there is shown that the non-specular reflection region 1 is constructed, and forms an oval specular reflection region 2 as an independent region.

In Fig. 6, there is shown that the non-specular reflection region 1 is constructed by rectangular lines, and forms a hexagonal specular reflection region 2 as an independent region. A shape of the independent region of the hexagonal specular reflection region shown in Fig. 6 is formed such that an aspect ratio (L/S) of an outer end length (L) in a longest direction of the independent region and an outer end length (S) in a vertical direction thereto becomes 2.5.

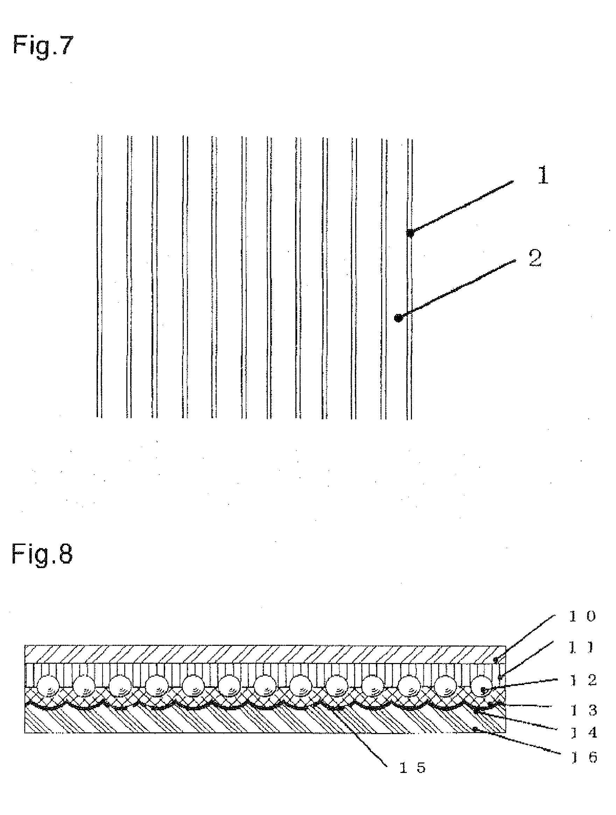

In Fig. 7, there is shown that the non-specular reflection region 1 is constructed by straight lines, and forms a rectangular specular reflection region 2 as an independent region. The rectangular specular reflection region in Fig. 7 is continuously connected to both end portions of the sheeting and has a very large aspect ratio.

In Fig. 8, there is shown that a part of a specular reflection layer 14 does not partly exist, and a non-specular reflection region 15 is formed, in a sealed lens type retroreflective sheeting corresponding to a preferable aspect of the present invention.

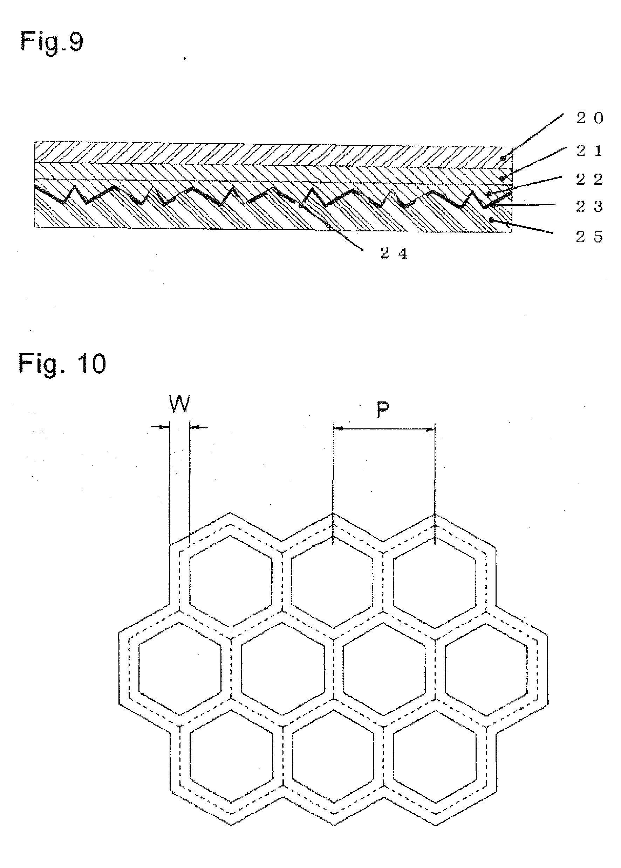

In Fig. 9, there is shown that apart of a specular reflection layer 23 does not partly exist, and a non-specular reflection region 24 is formed, in a cube corner type retroreflective sheeting corresponding to the other preferable aspect of the present invention.

In Fig. 10, there is shown a retroreflective sheeting in the present invention having the hexagonal specular reflection region shown in Fig. 2, in which an interval of adjacent hexagons is P, and a width of the non-specular reflection region is W.

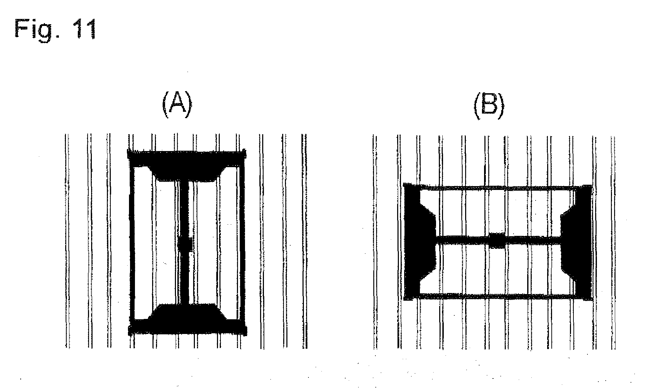

In Fig. 11, there is shown a positional relationship between the retroreflective sheeting in the present invention having the rectangular specular reflection region shown in Fig. 7 and an RFID tag. In Fig. 11A, there is shown an installation in which a longer side direction of the rectangle and a longitudinal direction of the tag are directed to the same direction, and in Fig. 11B, there is shown an installation in which they are vertical to each other,

With regard to a specific aspect of the retroreflective sheeting in which the specular reflection layer is installed, and which can be used in the present invention the description of the following publications can be referred, but it is not limited to them. In either type of retroreflective sheeting, the non-specular reflection region can be installed appropriately by using the methods of installing the noun-secular reflection region which are disclosed above.

As an example of the sealed lens type retroreflective sheeting, there is described in Japanese Patent Application Laid-Open (JP-A) No. 59-071848 of BELISLE et al. and its corresponding USP Nos. 4,721,649 and 4,725,494.

Further, as an example of the capsule lens type retroreflective sheeting, there is described in Japanese Patent Application Publication No. 40-007870 of MCKENZIE and its corresponding USP No. 3,190,178, JP-A No. 52-110592 of MCGRATH and its corresponding USP No. 4, 025, 159, and JP-A No. 62-121043 of BAILEY et al. and its corresponding USP No. 5,064,272.

Further, as the cube corner retroreflective sheeting in which the specular reflection layer is installed, there is described in Japanese Patent Application National Publication (Laid-Open) No. 8-510415 of ROWLAND and its corresponding USP No. 5,376,431, and WO 01/057560 of MIMURA et al. and its corresponding USP No. 6,817,724.

### Embodiment

A description will be specifically given below of details of the present invention with reference to an embodiment, but it goes without saying that the present invention is not limited only to the embodiment.

### <Measurement of Retroreflective Factor>

In addiction to the embodiment, the retroreflective factor described in the present specification is measured by a method mentioned below. "Model 920" manufactured by GAMMA SCIENTIFIC INC. is used as a retroreflective factor measuring device, the retroreflective factor of a sample to be measured of 100 mm x 100 mm is measured at five times under angle condition of observation angle 0.2 degree and incident angle 5 degree in accordance with ASTM E810-91, and the retroreflective factor of the retroreflective article is set by an average value thereof.

### <Measurement of Radio Wave Recognition Rate by RFID>

A sample for measuring a radio wave recognition rate is set by closely attaching and installing an HDT type of a passive type RFID tag manufactured by SINGLE CHIP SYSTEM CO., LTD to a back face of the measured sample by using a pressure sensitive adhesive sheet, and further installing a glass plate having a thickness of 9 mm to a front face of the measured sample in the same manner by using the pressure sensitive adhesive sheet. The recognition rate of the radio wave is determined on the basis of a number of times of response by transmitting 500 times of radio wave signals under a condition of US radio wave standard FCC Part 15 to the sample to be measured by using U519 type scanner manufactured by the same company and YAGI antenna having a wavelength of 915 MHz and a gain of 10 dbi.

### <Measurement of Electric Insulating Property between Independent Specular Reflection Regions>

An electric conducting property between two independent specular reflection regions is measured at ten positions by using a commercially available electric resistance measuring tester. As a determination of the electric conducting property, a case that the electric resistance by the tester indicates a value within 1000 Ω is evaluated as being electrically conductive. The sample in which the electric conducting property is not obtained at all tenpositions is evaluated as an insulating sample, the case that the electric conducting property is obtained at five or more positions is evaluated as a semi-insulating sample, and the case that the electric conducting property is obtained at all ten positions is evaluated as a non-insulating sample.

First of all, at a time of measuring, a sample number 1 is set to a measured sample obtained by laminating polyethylene terephthalate film of 75 µm in place of the retroreflective sheeting to the front face of the RFID tag, and a sample number 2 is set to a measuring sample using a normal retroreflective sheeting (a sealed lens type retroreflective sheeting manufactured by NIPPON CARBIDE INDUSTRIES CO., INC., NICKLITE MLG) in which the non-specular reflection region is not installed, and the radio wave recognition rate and the retroreflective factor thereof are measured and are shown in Table 1. Since the sample 1 is a resin material, it is an insulating material, and since the sample 2 is installed by an aluminum specular reflection layer over the whole surface, it has a conducting property between optional two points and is a non-insulating material.

The sample number 1 exhibits an excellent recognition rate in either reading distance, but in the sample number 2 using the conventionally known sample to which the non-specular reflection treatment is not applied, the radio wave can not be recognized at either reading distance.

**[Table 1]**

| Sample number | Reflection region area rate (%) | Recognition rate at each of reading distances (%) | | | | Retroreflective factor (cd/ lx/m²) |
|---|---|---|---|---|---|---|
| | | Reading distance 2 cm | Reading distance 30 cm | Reading distance 60 cm | Reading distance 90 cm | |
| 1 | 0 | 96% | 95% | 91% | 96% | 0 |
| 2 | 100 | 0% | 0% | 0% | 0% | 65 |

Next, there are formed samples 10 to 24 in which the non-specular reflection processing is carried out in a regular hexagonal shape shown in Fig. 2 in accordance with a laser processing method in the specular reflection layer surface in which the adhesive agent layer of the sealed lens type retroreflective sheeting manufactured by NIPPON CARBIDE INDUSTRIES CO., INC., NICKLITE MLG is not installed, and the measurement is carried out in accordance with the method mentioned above. Table 2 shows shapes of these samples. A center distance in Table 2 is shown as reference symbol P in the drawing explaining the hexagonal shape shown in Fig. 10. Further, a line width of the non-specular reflection region is shown as reference symbol W in Fig. 10. Further, the area rate of the specular reflection region of these samples is shown as a reflection region area rate.

The recognition rates and the retroreflective factors of these samples 10 to 24 are shown in the same manner in Table 2. The samples 10 to 14 having the line width 0.20 mm show an excellent recognition rate, in which the reflection region area rate is reduced and the recognition rate is improved. However, a change of the retroreflective factor is small. All of the samples are the insulating samples.

Further, the samples 15 to 19 having the line width 0.10 mm show an excellent recognition rate in the same manner, in which the reflection region area rate is reduced and the recognition rate is improved. However, the change of the retroreflective factor is small. A11 of the samples are the insulating samples.

On the other hand, in the samples 20 to 24 having the line width 0.05 mm, the radio wave can not be recognized in either reflection region area rate. All of the samples are the non-insulating samples.

**[Table 2]**

| Sample number | Non-reflection region shape | | | Reflection region area rate (%) | Recognition rate in each of reading distances (%) | | | | Retroreflective factor (cd/ lx/ m²) |
|---|---|---|---|---|---|---|---|---|---|
| | Shape | Center distance (mm) | Line width (mm) | | Reading distance 2 cm | Reading distance 30 cm | Reading distance 60 cm | Reading distance 90 cm | |
| 10 | Hexagon | 25 | 0.20 | 98.4 | 94% | 94% | 0% | 0% | 63 |
| 11 | | 20 | 0.20 | 98.0 | 95% | 97% | 0% | 0% | 62 |
| 12 | | 15 | 0.20 | 97.4 | 96% | 94% | 0% | 0% | 62 |
| 13 | | 10 | 0.20 | 96.0 | 91% | 99% | 77% | 0% | 61 |
| 14 | | 5 | 0.20 | 92.2 | 93% | 98% | 90% | 78% | 60 |
| 15 | Hexagon | 25 | 0.10 | 99.2 | 65% | 53% | 0% | 0% | 65 |
| 16 | | 20 | 0.10 | 99.0 | 62% | 55% | 0% | 0% | 64 |
| 17 | | 15 | 0.10 | 98.7 | 63% | 59% | 15% | 0% | 64 |
| 18 | | 10 | 0.10 | 98.0 | 52% | 56% | 47% | 0% | 63 |
| 19 | | 5 | 0.10 | 96.0 | 55% | 59% | 53% | 41% | 62 |
| 20 | Hexagon | 25 | 0.05 | 99.6 | 0% | 0% | 0% | 0% | 64 |
| 21 | | 20 | 0.05 | 99.5 | 0% | 0% | 0% | 0% | 64 |
| 22 | | 15 | 0.05 | 99.3 | 0% | 0% | 0% | 0% | 64 |
| 23 | | 10 | 0.05 | 99.0 | 0% | 0% | 0% | 0% | 64 |
| 24 | | 5 | 0.05 | 98.0 | 0% | 0% | 0% | 0% | 62 |

In the same manner, a rectangular specular reflection region as shown in Fig. 7 is installed in accordance with a laser processing method in the specular reflection layer surface in which the adhesive agent layer of the sealed lens type retroreflective sheeting manufactured by NIPPON CARBIDE INDUSTRIES CO., INC., NICKLITE MLG is not installed. Samples 30a to 37a in Table 3 are installed in such a manner that a positional relationship between the retroreflective sheeting in the present invention having the rectangular specular reflection region as shown in Fig. 11B and the RFID tag becomes vertical. Further, in samples 30b to 37b, there are shown a center distance and a line width of the non-specular reflection regions of the samples which are installed to be in parallel to each other, and an area rate of the specular reflection region.

In the same manner, in Table 3, there are shown measured values of a recognition rate in each of the distances of the retroreflective sheeting having the rectangular specular reflection region, and a retroreflective factor. All the samples have an excellent retroreflective factor. Further, all the samples are determined to be an insulating material.

Since the samples 30a to 37a are installed in such a manner that the positional relationship between the retroreflective sheeting in the present invention having the rectangular specular reflection region and the RFID tag becomes vertical, they exhibit an excellent recognition rate. The samples 30a to 33a having the line width of 0.20 mm exhibits an excellent recognition rate as a whole in comparison with the samples 34a to 37a having the line width of 0.05 mm.

Further, among the sample group having the same line width, the better recognition rate is indicated even in the longer reading distance as the sample in which the center distance of the non-specular reflection region is smaller and the reflection region area rate is smaller.

On the other hand, in the samples 30b to 37b, they are installed in such a manner as to be in parallel to each other, and the radio wave can not be recognized in either samples.

Accordingly, in the radio wave transmission type reflection sheeting having the rectangular specular reflection region as mentioned above, it is important to install the radio wave transmission type retroreflective sheeting in accordance with the present invention and the antenna of the RFID tag in such a manner that the installing directions become vertical, and in the case that they are installed in parallel, a preferable radio wave recognition performance can not be obtained even if the shape of the non-specular reflection region is formed suitably.

**[Table 3]**

| Sample number | Non-reflection region shape | | | Reflection region area rate (%) | Recognition rate in each of reading distances (%) | | | | Retroreflective factor (cd/ lx/ m²) |
|---|---|---|---|---|---|---|---|---|---|
| | Shape | Center distance (mm) | Line width (mm) | | Reading distance 2 cm | Reading distance 30 cm | Reading distance 60 cm | Reading distance 90 cm | |
| 30a | Rectangular and vertically placed | 20 | 0.20 | 99.0 | 97.0% | 0,0% | 0.0% | 0.0% | 65 |
| 31a | | 15 | 0.20 | 98.7 | 96.0% | 38.0% | 0.0% | 0.0% | 63 |
| 32a | | 10 | 0.20 | 98.0 | 95.0% | 67.0% | 43.0% | 0.0% | 63 |
| 33a | | 5 | 0.20 | 96.0 | 98.0% | 85.0% | 77.0% | 67.0% | 62 |
| 34a | Rectangular and vertically 37a placed | 20 | 0.05 | 99.8 | 15.8% | 0.0% | 0.0% | 0.0% | 64 |
| 35a | | 15 | 0.05 | 99.7 | 31.6% | 19.0% | 0.0% | 0.0% | 64 |
| 36a | | 10 | 0.05 | 99.5 | 96.2% | 47.0% | 23.0% | 0.0% | 64 |
| | | 5 | 0.05 | 99.0 | 96.6% | 96.0% | 57.4% | 43.0% | 64 |
| 30b | Rectangular and horizontally placed | 20 | 0.20 | 99.0 | 0.0% | 0.0% | 0.0% | 0.0% | 64 |
| 31b | | 15 | 0.20 | 98.7 | 0.0% | 0.0% | 0.0% | 0.0% | 63 |
| 32b | | 10 | 0.20 | 98.0 | 0.0% | 0.0% | 0.0% | 0.0% | 63 |
| 33b | | 5 | 0.20 | 96.0 | 0.0% | 0.0% | 0.0% | 0.0% | 62 |
| 34b | Rectangular and horizontally placed | 20 | 0.05 | 99.8 | 0.0% | 0.0% | 0.0% | 0.0% | 63 |
| 35b | | 15 | 0.05 | 99.7 | 0.0% | 0.0% | 0.0% | 0.0% | 65 |
| 36b | | 10 | 0.05 | 99.5 | 0.0% | 0.0% | 0.0% | 0.0% | 64 |
| 37b | | 5 | 0.05 | 99.0 | 0.0% | 0.0% | 0.0% | 0.0% | 63 |

### Industrial Applicability

The retroreflective sheeting in the present invention can be preferably used in the RFID holding the night-time visibility by being combined with the RFID.

Further, the retroreflective sheeting in the present invention is the radio wave transmission type retroreflective sheeting which can efficiently transmit the weak radio wave in the communication of the RFID using the weak radio wave, and can be particularly used preferably in the passive type RFID.

Further, the retroreflective sheeting in the present invention can use the retroreflective type RFID mentioned above for the vehicle number plate, the third plate, the traffic sign or the like.

## Claims

1. A radio wave transmission type retroreflective sheeting in which a specular reflection layer is installed, wherein a specular reflection region in which the specular reflectionlayer is installed is comparted by a non-specular reflection region in which the specular reflection layer is not installed, is installed by a repeated pattern so as to form an independent region, and exhibits a radio wave transmitting property.

2. A radio wave transmission type retroreflective sheeting in which a specular reflection layer is installed, wherein a specular reflection region in which the specular reflection layer is installed is comparted by a non-specular reflection region in which the specular reflection layer is not installed, is electrically insulated from each other and is installed by a repeated pattern so as to forman independent region, and exhibits a radio wave transmitting property.

3. The radio wave transmission type retroreflective sheeting according to claim 1, wherein the non-specular reflection region is constructed by straight line shaped, bending line shaped or/and curved line shaped linear regions having a width between 0.1 and 10 mm.

4. The radio wave transmission type retroreflective sheeting according to claim 1 or 2, wherein the linear region constructs a coupled region.

5. The radio wave transmission type retroreflective sheeting according to any one of claims 1 to 3, wherein a shape of the independent region of the specular reflection region is set such that an aspect ratio (L/S) of an outer end length (L) in a longest direction of the independent region and an outer end length (S) in a vertical direction thereto is equal to or more than 2.

6. The radio wave transmission type retroreflective sheeting according to any one of claims 1 to 4, wherein an area rate of the independent region of the specular reflection region is between 85 and 99%.

7. The radio wave transmission type retroreflective sheeting according to any one of claims 1 to 5, wherein a retroreflective element constructing the retroreflective sheeting is constructed by an open lens type reflection element, a sealed lens type retroreflective element, a capsule lens type retroreflective element or a cube corner type retroreflective element.

8. The radio wave transmission type retroreflective sheeting according to any one of claims 1 to 6, wherein a specular reflection layer component constructing the specular reflection layer is constructed by an aluminum, a silver, a nickel, and/or a copper.

9. The radio wave transmission type retroreflective sheeting according to any one of claims 1 to 7, wherein the region forming the non-specular reflection region is a part of the retroreflective sheeting.
